# EUROPÄISCHE PATENTSCHRIFT

(11) **EP 1 283 764 B1**
(45) Veröffentlichungstag und Bekanntmachung des Hinweises auf die Patenterteilung: **10.09.2008**
(21) Anmeldenummer: 01934010.8
(22) Anmeldetag: 23.05.2001
(51) Int. Cl.: B25J 18/04, B25J 9/12, H02K 41/03, H02K 37/14

(54) **HUB-/SCHWENKANTRIEB**
LIFT AND TURN DRIVE UNIT
ENTRAINEMENT DE LEVAGE/PIVOTEMENT

(30) Priorität: 23.05.2000 DE 10025351
(43) Veröffentlichungstag der Anmeldung: 19.02.2003
(73) Patentinhaber: Wittenstein AG, 97999 Igersheim (DE)
(72) Erfinder: ORTMEIER, Helmut, 97990 Weikersheim (DE); LANG, Walter, 97999 Igersheim (DE)
(74) Vertreter: Weiss, Peter
(86) Internationale Anmeldenummer: PCT/EP2001/005940
(87) Internationale Veröffentlichungsnummer: WO 2001/089773

(56) Entgegenhaltungen:
- EP-A- 0 797 287
- DE-A- 2 906 404
- US-A- 5 404 983
- US-A- 5 952 744

## Beschreibung

Die vorliegende Erfindung betrifft einen Hub-/Schwenkantrieb mit einem Arbeiteselement, welches gegenüber zumindest einem Gehäuseelement drehbar und linear verfahrbar ist, wobei das Arbeitselement aus zumindest einem Hubelement und zumindest einem Drehelement gebildet ist, wobei das Hubelement gegenüber einer rotativen Bewegung des Drehelementes entkoppelt ist.

Derartige Hub-/Schwenkantriebe sind in vielfältiger Form und Ausführung im Markt bekannt und gebräuchlich. Sie dienen auf unterschiedlichen Gebieten im wesentlichen dazu eine ganz bestimmte Hubbewegung, bspw. eines Werkzeuges bei gleichzeitiger oder anschliessender Drehbewegung durchzuführen, um ein bestimmtes Werkstück zu bearbeiten oder bspw. einem bestimmten Gegenstand aufzunehmen und an einen anderen Ort abzulegen. Dabei werden bspw. bei herkömmlichen Hub-/Schwenkantrieben Kurvenscheibengetriebe verwendet, die einem hohen Verschleiss unterliegen und hierdurch ungenau sind.

Ferner sind derartige Hub-/Schwenkantriebe sehr langsam im Betrieb und daher nur begrenzt in der Produktion einsetzbar. Beispielsweise werden derartige Hub-/Schwenkantriebe bei der Herstellung von Compakt-Disks (CD) verwendet, die zum Beschichten des Kunststoffträgers in eine entsprechenden Vorrichtung hierfür eingesetzt werden müssen. Dieses Einsetzen muss sehr exakt, präzise und sehr schnell geschehen können. Derartige Fertigungseinrichtungen sind 24-Stunden täglich in Betrieb und erfordern lange Standzeiten bei hohen Geschwindigkeiten. Gerade durch Verschleiss wird die Präzision erheblich beeinträchtigt, was nachteilig ist. Höhere Geschwindigkeiten haben einen höheren verschleiss und eine höhere Ausfallrate zur Folge, was unerwünscht ist.

Ferner können bspw. derartige Hub-/Schwenkantriebe als "Waverhandling" in der Halbleiterindustrie Anwendung finden. Eine Hohlwelle mit Möglichkeiten zur Durchführung ist bisher unzureichend realisierbar. Die herkömmlichen Hohlwellendurchmesser von Hub-/Schwenkantrieben sind zu klein.

Ferner ist nachteilig bei herkömmlichen Hub-/Schwenkantrieben, dass diese relativ gross sind und eine wenig kompakte Bauweise aufweisen, was unerwünscht ist.

Die US 5,404,983 offenbart einen Hub-/Schwenkantrieb, der aus zwei hintereinander in Reihe geschalteten Aktuatoren gebildet ist. Der erste Aktuator führt eine lineare Bewegung aus und ist an den zweiten Aktuator gekoppelt. Der zweite Aktuartor ist ein rotativ verdrehbarer Aktuator, um eine Welle rotativ anzutreiben.

Die EP 0 797 587 A2 betrifft einen Hub-/Schwenkantrieb, wobei ein rotativer Aktuator eine Betätigungsstange rotativ antreibt. Zum Durchführen des Hubes wird der rotative Aktuator mittels eine Linearaktuators linear hin- und herbewegt. Zur Präzisierung der linearen Bewegung ist der rotative Aktuator auf einer Führungsschiene geführt.

Der vorliegenden Erfindung liegt die Aufgabe zugrunde, einen Hub-/Schwenkantrieb der eingangs genannten Art zu schaffen, welche die genannten Nachteile beseitigt und mit welchem insbesondere die Präzision, die Geschwindigkeiten, Beschleunigungen, rotativer und linearer Art bei höheren Standzeiten erheblich gesteigert werden soll. Ferner soll eine Steuerung der linearen und rotativen Bewegung des Arbeitselementes hochpräzise und exakt möglich sein. Zudem soll ein derartiger Hub-/Schwenkantrieb universell, was insbesondere seine Baugrössen, seine Baulängen und seinen Durchmesser betrifft universell herstellbar sein.

Zur Lösung dieser Aufgabe führen die Merkmale des Patentanspruches 1.

Bei der vorliegenden Erfindung wird zunächst auf die Funktionsweise des Hub-/Schwenkantriebes gemäss der DE 100 25 351.2 verwiesen. Gegenüber dieser unterscheidet sich die vorliegende Erfindung, dass das Arbeitselement aus einem Hubelement und zumindest einem Drehelement gebildet ist. Dabei ist von wesentlicher Bedeutung, bei der vorliegend Erfindung, dass das Drehelement rotativ gegenüber dem Hubelement entkoppelt ist. Zwischen Hubelement und Drehelement ist zumindest ein Lagerelement eingesetzt, um die Entkopplung zu gewährleisten.

In einem Ausführungsbeispiel wird das Hubelement, insbesondere dessen Hubmodul mittels eines Linearantriebes gegenüber einem Gehäuseelement lediglich linear hin- und herbewegt. Dem Hubmodul sitzt eine Drehhülse, insbesondere als Rotor ausgebildet, rotativ entkoppelt über ein dazwischen eingesetztes Lagerelement auf, wobei die Drehhülse des Drehelementes mittels eines Drehantriebes rotativ antreibbar ist.

Der Drehantrieb sitzt fest gegenüber einem Drehantriebsgehäuse, das nicht bewegt wird. Daher ist, um eine Hublänge die Drehhülse länger ausgebildet, um einen Hubausgleich zu ermöglichen.

Um die Baulänge zu reduzieren, kann das Hubmodul koaxial das Drehelement vollständig oder zumindest teilweise, insbesondere die Drehhülse bzw. deren Drehantrieb übergreifen. Hierdurch wird eine kurze Bauweise realisiert. Sind jedoch Hubelement und Drehantrieb direkt hintereinander anschliessend angeordnet, so lässt sich eine lange, aber querschnittlich relativ kleine Bauweise realisieren.

Zur Endlagendämpfung kann zwischen einer Grundplatte des Gehäuseelementes und dem Hubelement zumindest ein Federelement eingesetzt sein.

Ferner sind dem Hubelement sowie dem Drehelement jeweils ein Messsystem zur Messung der linearen bzw. rotativen Bewegung zugeordnet.

Auch diese Ausführungsform, dass das vollständige Drehelement mittels des Hubelementes bzw. Hubmodules linear bewegt wird, lässt sich linear hintereinander anordnen oder in oben beschriebener Weise koaxial ineinander anordnen, so dass die Gesamtbaulänge des Hub-/Schwenkantriebes reduzierbar ist. Dies soll ebenfalls im Rahmen der vorliegenden Erfindung liegen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Längsschnitt durch einen Hub-/Schwenkantrieb mit Hubelement und Drehelement welcher keine tustihmangs from der Verligender Erfinding darstellt;
Figur 2 einen schematisch dargestellten Längsschnitt durch ein Ausführungsbeispiel der vor-Ligenden Erfindung mit Hubelement und Drehelement;
Figur 3 einen schematisch dargestellten Längsschnitt durch einen Hub-/Schwenkantrieb mit Hubelement und Drehelement in paralleler Anordnung welcher keine tustihmangs from der Verligender Erfinding darstellt;;
Figuren 4a bis 4c weitere Längsschnitte durch weitere Hub-/Schwenkantriebe mit Hubelement und Drehelement in unterschiedlichen Anordnungen welcher keine tustihmangs from der Verligender Erfinding darstellt;;
Figur 5 eine schematisch dargestellte Draufsicht auf eine mögliche Anordnung eines Hubelementes gemäss dem Hub-/Schwenkantrieb nach Figur 1.

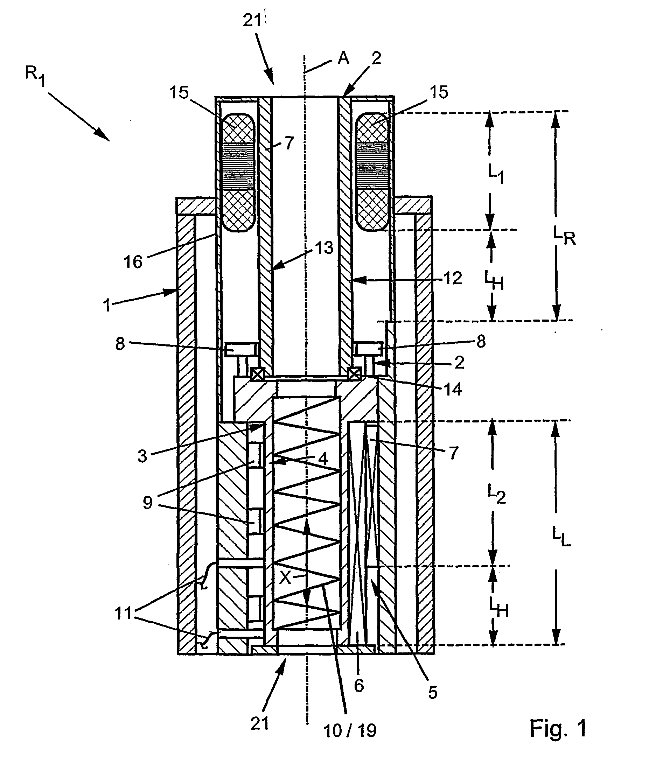

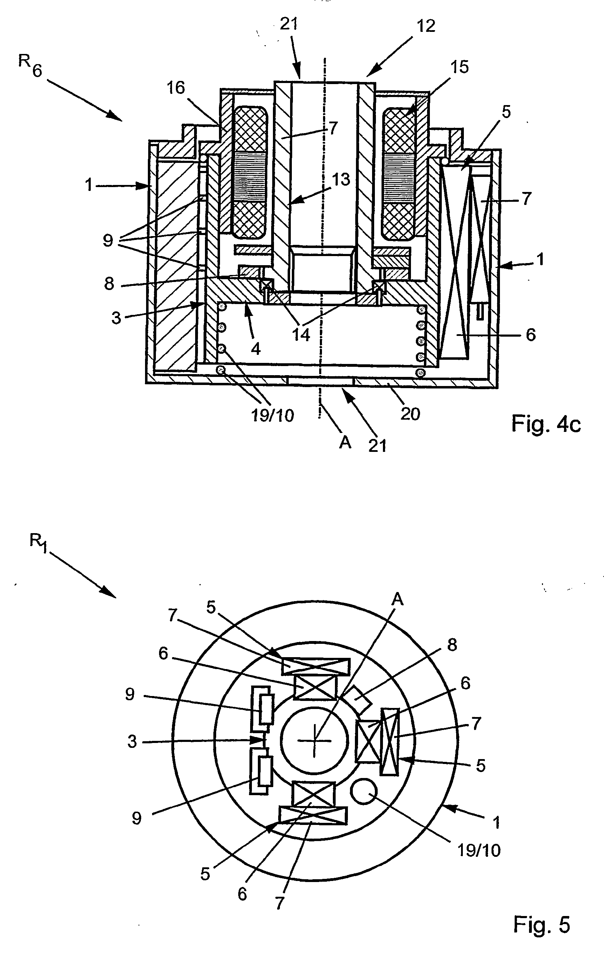

Gemäss Figur 1 weist ein Hub-/Schwenkantrieb R1 ein Gehäuseelement 1 auf, in welchem ein Arbeitselement 2 gelagert ist. Das Arbeitselement 2 ist aus einem Hubelement 3, welches eine Hubbewegung eines Hubmodules 4 gegenüber dem Gehäuseelement 1 zulässt und einem Drehelement 12 gebildet. Das Hubelement 3 ist entlang einer Achse A linear wie in Doppelpfeilrichtung X dargestellt mittels eines Linearantriebes 5 verfahrbar. Der Linearantrieb 5 besteht im wesentlichen aus wenigstens einem Primärteil 6, welches dem Hubelement 3 zugeordnet ist und einem Sekundärteil 7, welches mit dem Gehäuseelement 1 in Verbindung steht. Ferner kann, wie es insbesondere in Figur 5 dargestellt ist, dem Hubmodul 4 ein Messsystem 8 zugeordnet sein, welches eine lineare Bewegung des Hubmodules 4 gegenüber dem Gehäuseelement 1 misst und hierüber eine lineare Bewegung exakt steuerbar ist.

Ferner geht aus Figur 5 hervor, dass zumindest eine Linearführung 9 zwischen Gehäuseelement 1 und Hubelement 3 angeordnet ist, um eine lineare Bewegung des Hubmodules 4 gegenüber dem Gehäuseelement 1 exakt und präzise insbesondere spielfrei zuzulassen. Es können auch mehrere Linearführungen od. dgl. Lagerelemente, Führungswagen od. dgl. vorgesehen sein, um eine lineare Führung des Hubmodules 4 gegenüber dem Gehäuseelement 1 zu gewährleisten. Ferner ist aus Figur 5 ersichtlich, dass eine Mehrzahl von Linearantriebe 5 mit jeweils Primärteilen 6 und Sekundärteilen 7 vorgesehen sind, um das Hubmodul 4 gegenüber dem Gehäuselement 1 linear entlang der Achse A zu bewegen.

Ferner kann dem Hubmodul 4 auch ein Massenausgleich 10 zugeordnet sein, um die zur Verfügung stehende Motorleistung in eine höhere Beschleunigung bzw. Dynamik umzusetzen. Auch sei daran gedacht, wie es insbesondere in Figur 1 hervorgeht, eine Mehrzahl von Endlagenschalter 11 dem Gehäuseelement 1 zuzuordnen, die axial zueinander beabstandet sind, um jeweils einen maximalen Hub bzw. die Endlagen des Hubes des Hubelementes 3 zu erkennen.

Wichtig bei dem vorliegenden Ausführungsbeispiel ist, dass stirnseitig an das Hubelement 3 das Drehelement 12 linear anschliesst, wobei das Drehelement 12 als Drehhülse 13 ausgebildet ist. Die Drehhülse 13 bzw. das Drehelement 12 liegt ebenfalls in der Achse A des Hubelementes 3 und schliesst dort stirnseitig an. Die Besonderheit der vorliegenden Erfindung ist, dass das Drehelement 12 bzw. dessen Drehhülse 13 über ein dazwischen angeordnetes Lagerelement 14 mit dem Hubelement 3, insbesondere mit dem Hubmodul 4 verbunden ist. Auf diese Weise wird eine Drehbewegung des Drehelementes 12 bzw. der Drehhülse 13 gegenüber dem Hubelement 3 entkoppelt. Das Hubelement 3 ist lediglich entlang der dargestellten Doppelpfeilrichtung X linear bewegbar, wobei das Drehelement 12 um die Achse A verdrehbar angeordnet ist. Im vorliegenden Ausführungsbeispiel ist die Drehhülse 13 als Sekundärteil 7 ausgebildet. Die Drehhülse 13 wird von einem Drehantrieb 15 zumindest teilweise koaxial umfangen und ist gegenüber dem Gehäuseelement 1 festgelegt. Das Sekundärteil 7 bzw. zumindest ein Teil der Drehhülse 13 kann als Permanentmagnet ausgebildet sein. Hierdurch lässt sich mittels des Drehantriebes 15 ein Drehmotor bilden, welcher rotativ um die Achse A die Drehhülse 13 antreibt. An dieser kann stirnseitig ein beliebiges Werkzeug angeflanscht oder ein beliebiges Werkstück aufgenommen werden.

Ferner kann ebenfalls dem Drehantrieb 15 ein Messystem 8 zugeordnet sein, um eine rotative Bewegung aufzunehmen bzw. zu steuern. Im vorliegenden Ausführungsbeispiel ist das Gehäuseelement 1 zweiteilig ausgebildet, wobei ein Drehantriebgehäuse 16 innerhalb des Gehäuseelementes 1 angeordnet und dort fest gelagert ist. Dieses dient zum Aufnehmen des Drehantriebes 15.
Im Rahmen der vorliegenden Erfindung soll jedoch auch liegen, das Gehäuseelement 1 einteilig auszubilden.

Ein weiterer Vorteil des vorliegenden Hub-/Schwenkantriebes R1 ist, dass dieser querschnittlich sehr klein ausgebildet werden kann, jedoch eine bestimmt Länge aufweist. Der Hub ist beliebig definierbar und einstellbar. Hubmodul 4 sowie Drehhülse 13 sind von einer Länge LL bzw. LR, die bestimmt wird aus einer Länge L1 des Drehantriebes 15 und einer Hublänge LH bzw. aus einer Länge L2 des Sekundärteiles 7 zuzüglich der Hublänge LH.

Ist eine grössere Hublänge LH erwünscht, so muss entsprechend Hubelement 3 bzw. Hubmodul 4 sowie Drehelement 12 bzw. Drehhülse 13 jeweils verlängert werden.

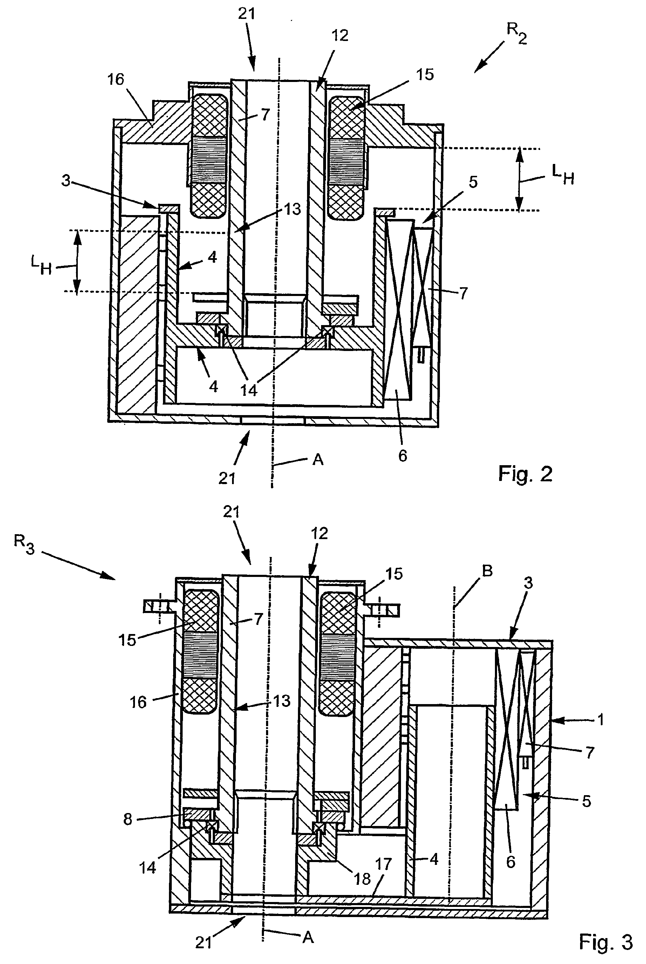

In dem Ausführungsbeispiel gemäss Figur 2 ist ein Hub-/Schwenkantrieb R2 aufgezeigt, welcher in etwa der oben beschriebenen Weise entspricht. Unterschiedlich ist, dass das Hubmodul 4 koaxial beim Anheben bzw. linearen Verfahren, das Drehantriebsgehäuse 16 zumindest teilweise übergreift und dieses bzw. der Drehantrieb 15 innerhalb des Hubmodules 4 stirnseitig aufgenommen werden kann. Hierdurch wird eine geringere Gesamtbaulänge des Hub-/Schwenkantriebes R2 durch das koaxiale Ineinandergreifen bzw. Verfahren von Hubmodul 4 bzw. Hubelement 3 gegenüber Drehelement 12 gewährleistet. Zwar nimmt eine Gesamtbreite bzw. ein Gesamtquerschnitt des Hub-/Schwenkantriebes R2 zu, jedoch lässt sich eine geringere Baulänge hierdurch realisieren.

Das Drehelement 12 ist ebenfalls verdrehbar, antriebbar und rotativ über das Lagerelement 14 gegenüber dem Hubelement 3 bzw. Hubmodul 4 entkoppelt gelagert.

Ebenfalls lässt sich, wie in dem Ausführungsbeispiel gemäss Figur 3 dargestellt ist auch bei dem Hub-/Schwenkantrieb R3 eine geringe Baulänge durch paralleles Anordnen von Drehelement 12 und Hubelement 3 realisieren. Dabei sind Drehelement 12 und Hubelement 3 parallel nebeneinander angeordnet, wobei das Drehelement 12 in oben beschriebener Weise um die Achse A verdrehbar ist und das Hubelement 3 um eine parallel hierzu liegende Achse B in oben beschriebener Weise mittels des Linearantriebes 5 linear bewegbar ist. Dabei schliesst stirnseitig an das Hubmodul 4 eine Verbindungsplatte 17 an, die mit einem Trägerelement 18, welches linear zur Achse A gelagert ist, verbunden ist. Auf dem Trägerelement 18 als Bestandteil des Hubmodules 4 bzw. Hubelementes 3 sitzt entkoppelt über das Lagerelement 14 das Drehelement 12 bzw. die Drehhülse 13 auf. In diesem Ausführungsbeispiel schliesst stirnseitig an das Trägerelement 18 das Messsystem 8 zum Messen der rotativen Drehbewegung der Drehhülse 13 an. Durch die parallele Anordnung von Hubelement 3 zu Drehelement 12 lässt sich ebenfalls eine äusserst geringe Gesamtbaulänge des Hub-/Schwenkantriebes R3 verwirklichen.

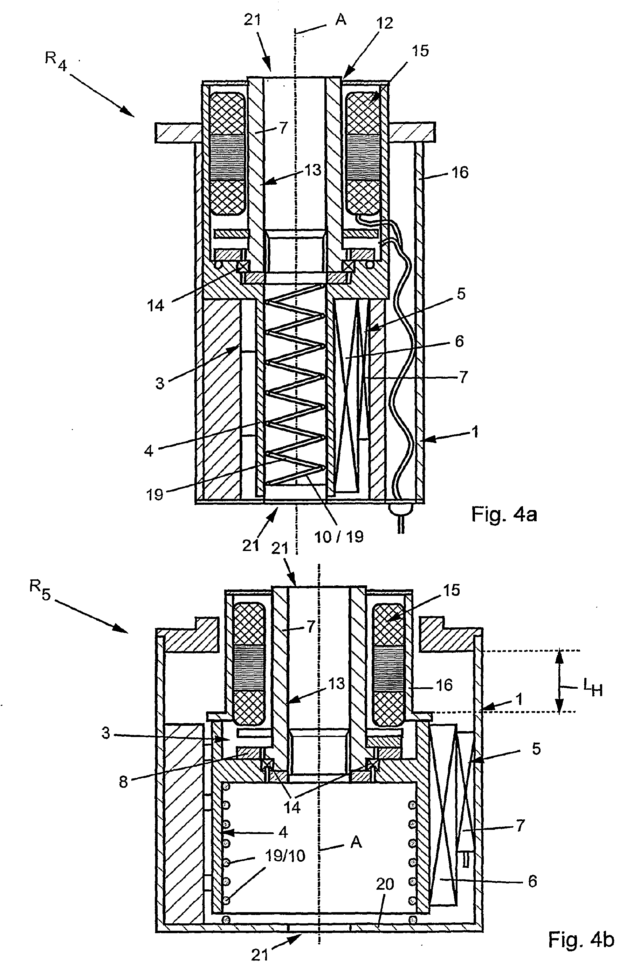

In einem weiteren Ausführungsbeispiel gemäss Figur 4a ist bei einem Hub-/Schwenkantrieb R4 das Drehantriebsgehäuse 16 mit dem Hubmodul 4 verbunden. Hierdurch lässt sich das vollständige Drehelement 12 mit Drehantrieb 15 und Drehantriebsgehäuse 16 über das Hubelement 3 bzw. dessen Hubmodul 4 anheben. Ein Hubausgleich für den Drehantrieb 15, wie er in den vorherigen Ausführungsbeispielen beschrieben ist, entfällt. Die Drehhülse 13 bzw. das Drehelement 12 ist über das zumindest eine Lagerelement 14 gegenüber dem Hubmodul 4 rotativ entkoppelt. In oben beschriebener Weise lässt sich das Hubmodul 4 bzw. Hubelement 3 lediglich entlang der Achse A linear hin und herverfahren. Die Drehhülse 13 bzw. das Drehelement 12 ist jedoch lediglich um die Achse A in oben beschriebener Weise mittels des Drehantriebes 15 verdrehbar.

Bevorzugt ist innerhalb des Hubmodules 4 ein Federelement 19 eingesetzt, welches sich stirnseitig einends am Hubmodul 4 und andernends an einer Grundplatte 20 des Gehäuseelementes 1 abstützt, eingesetzt, um bevorzugt einen Massenausgleich und bei bspw. Stromausfall eine Dämpfung insbesondere im Endlagenbereich zu gewährleisten.

Beispielsweise bei Stromausfall lässt sich eine Hubbewegung des Hubmodules 4 gegen die Grundplatte 20 abfangen bzw. dämpfen.

Ein ähnliches Ausführungsbeispiel eines Hub-/Schwenkantriebes R5 zeigt Figur 4b, bei welchem ebenfalls in oben beschriebener Weise das Hubmodul 4, welches linear entlang der Achse A mittels des Linearantriebes 5 verfahrbar ist, das Drehantriebsgehäuse 16 trägt, in welchem der Drehantrieb 15 fest angeordnet ist. Über das Lager 14 ist die Drehhülse 13 des Drehelementes 12 rotativ entkoppelt und mittels des Drehantriebes 15 rotativ antreibbar. Nahe des Lagers 14 sitzt auf dem Hubmodul 4 das rotative Messsystem 8. Auf diese Weise lässt sich ebenfalls das vollständige Drehelement 12 mit Drehantriebsgehäuse 16, Drehantrieb 15 und Drehhülse 13 linear über das Hubelement 3 bzw. Hubmodul 4 verfahren bzw. bewegen. Auch hier entfällt ein Hubausgleich des Linearantriebes 5. Ferner ist von Vorteil, dass durch die Anordnung des Hubmodules 4, insbesondere des Linearantriebes 5 koaxial zumindest teilweise die Drehhülse 13 bzw. Drehantrieb 15 übergriffen werden, so dass eine kurze und kompakte Bauweise des Hub-/Schwenkantriebes R5 ähnlich wie im Ausführungsbeispiel gemäss Figur 2 dargestellt ist, realisiert werden kann. Entsprechend dem Ausführungsbeispiel gemäss Figur 4a ist ein Federelement 19 vorgesehen, welches im wesentlichen dem Massenausgleich dient und zum Beispiel bei Stromausfall eine Dämpfung der Hubbewegung, insbesondere der Endlagendämpfung gewährleistet.

Der Massenausgleich 10/19 bzw. das Federelement 10/19, welches bei allen Ausführungsbeispielen zugeordnet sein kann, ist je nach Einbaulage des Hub-/Schwenkantriebes stärker oder schwächer ausgebildet und kann bspw. bei horizontaler Einbaulage weggelassen werden.

In dem Ausführungsbeispiel gemäss Figur 4c übergreift das Hubmodul 4 nahezu koaxial und vollständig das Drehantriebsgehäuse 16, in welchem in oben beschriebener Weise der Drehantrieb 15 festgelegt ist. Radial zwischen Hubmodul 4 und Gehäuseelement 1 ist der verdrehfeste Linearantrieb 5 vorgesehen. Im vorliegenden Ausführungsbeispiel wird, wie in den Ausführungsbeispielen der Figuren 4a und 4b das Drehantriebsgehäuse 16 mit dem Hubmodul 4 gekoppelt bzw. das vollständige Drehelement 12 ist linear entlang der Achse A mittels des Hubmodules 4 verfahrbar. Die Drehhülse 13 ist über das Lager 14 gegenüber dem Hubmodul 4 des Hubelementes 3 rotativ entkoppelt. Entsprechende Linearführungen 9 gewährleisten ein präzises Ausfahren des Hubelementes 4 aus dem Gehäuseelement 1. Hierdurch wird eine äusserst kurze Bauweise des Hub-/Schwenkantriebes R5 ermöglicht.

Bevorzugt sind die Hubmodule 4 querschnittlich, rechteckartig, quadratisch, vieleckartig ausgebildet und können nur linear bewegt werden, wobei vorzugsweise alle Drehhülsen rohrartig ausgebildet sind.

Bevorzugt sind Hubmodul 4 sowie Drehhülse 13 als Hohlwellenelemente ausgebildet, die entsprechende Durchführungen 21 gewährleisten. Dabei liegen vorzugsweise Hubmodul 4 und Drehhülse 13 in einer Achse. Hierdurch lässt sich eine querschnittlich betrachtet sehr grosse Durchführung 21 für Leitungen, elektrische Leitungen, pneumatische Leitungen etc. gewährleisten. Dies ist von grossem Vorteil bei der vorliegenden Erfindung, da auf diese Weise Hub-/Schwenkantrieb R1 bis R6 sehr universell einsetzbar ist.

## Patentansprüche

1. Hub-/Schwenkantrieb mit einem Arbeitselement (2), welches gegenüber zumindest einem Gehäuseelement (1) drehbar und linear verfahrbar ist, wobei das Arbeitselement (2) aus zumindest einem Hubelement (3) und zumindest einem Drehelement (12) gebildet ist, wobei das Hubelement (3) gegenüber einer rotativen Bewegung des Drehelementes (12) entkoppelt ist,
**dadurch gekennzeichnet,**
**dass** das Hubelement (3) und das Drehelement (12) rotativ entkoppelt und koaxial ineinander angeordnet sind.

2. Hub-/Schwenkantrieb nach Anspruch 1, **dadurch gekennzeichnet, dass** das Arbeitselement (2) aus zumindest einem Hubelement (3) und zumindest einem Drehelement (12) gebildet ist, wobei das Drehelement (12) mit zumindest einem Drehantrieb (15) und das Hubelement (3) mit wenigstens einem Linearantrieb (5) zusammenwirkt.

3. Hub-/Schwenkantrieb nach Anspruch 1 oder 2, **dadurch gekennzeichnet, dass** dem Arbeitselement (2), insbesondere dem Hubelement (3) und Drehelement (12) jeweils ein Messsystem (8) zugeordnet ist.

4. Hub-/Schwenkantrieb nach Anspruch 2 oder 3, **dadurch gekennzeichnet, dass** das Hubelement (3) axial bewegbar und radial verdrehfest an das Drehelement (12) anschliesst, wobei das Drehelement (12) innerhalb eines Drehantriebes (15) rotativ gegenüber dem Hubelement (3) bewegbar und der Drehantrieb (15) gegenüber dem Gehäuseelement (1, 16) festgelegt ist.

5. Hub-/Schwenkantrieb nach Anspruch 3 oder 4, **dadurch gekennzeichnet, dass** Hubelement (3) und Drehelement (12) in einer gemeinsamen Achse (A) hintereinander angeordnet sind.

6. Hub-/Schwenkantrieb nach wenigstens einem der Ansprüche 1 bis 5, **dadurch gekennzeichnet, dass** das Hubelement (3) und/oder das Drehelement (12) mittels wenigstens einem Kraftspeicherelement (10/19) gegenüber dem Gehäuseelement (1) federnd, zur Realisierung eines Massenausgleiches und damit zur Entlastung des Linearantriebes (5) gelagert ist.

7. Hub-/Schwenkantrieb nach wenigstens einem der Ansprüche 1 bis 6, **dadurch gekennzeichnet, dass** dem Drehelement (12) eine Drehhülse (13) und dieser ein Drehantrieb (15) zugeordnet ist, wobei die Drehhülse (13) gegenüber dem Drehantrieb (15) linear und rotativ bewegbar ist.

8. Hub-/Schwenkantrieb nach Anspruch 7, **dadurch gekennzeichnet, dass** die Drehhülse (13) als Sekundärteil (7) des Drehantriebes (12) ausgebildet ist.

9. Hub-/Schwenkantrieb nach wenigstens einem der Ansprüche 2 bis 8, **dadurch gekennzeichnet, dass** der Drehantrieb (15) mit einem Drehantriebsgehäuse (16) oder Gehäuseelement (1) fest verbunden ist.

10. Hub-/Schwenkantrieb nach Anspruch 7 oder 8, **dadurch gekennzeichnet, dass** der Drehantrieb (15) innerhalb oder ausserhalb der Drehhülse (13) angeordnet ist und die Drehhülse (13) gegenüber dem Drehantrieb (12) linear und rotativ bewegbar ist.

11. Hub-/Schwenkantrieb nach wenigstens einem der Ansprüche 2 bis 10, **dadurch gekennzeichnet, dass** das Hubelement (3) ein Hubmodul (4) aufweist, welchem zumindest ein Linearantrieb (5) zugeordnet ist, wobei das Hubmodul (4) gegenüber dem Linearantrieb (5) axial bewegbar ist.

12. Hub-/Schwenkantrieb nach Anspruch 11, **dadurch gekennzeichnet, dass** der Linearantrieb (5) gegenüber dem Gehäuseelement (1) festgelegt und das Hubmodul (4) innerhalb oder ausserhalb des Linearantriebes (5) angeordnet ist.

13. Hub-/Schwenkantriebe nach wenigstens einem der Ansprüche 1 bis 12, **dadurch gekennzeichnet, dass** an das Hubelement (3) ein Drehantriebsgehäuse (16) anschliesst in welchem der Drehantrieb (15) angeordnet ist, wobei die Drehhülse (13) über zumindest ein Lagerelement (14) rotativ gegenüber einem dem Hubelement (3) zugeordneten Hubmodul (4) entkoppelt und das Drehelement (12) mittels des Hubmoduls (4) linear bewegbar ist.

14. Hub-/Schwenkantrieb nach wenigstens einem der Ansprüche 11 bis 13, **dadurch gekennzeichnet, dass** das Hubmodul (4) als Rohrelement, Rechteckrohr, quadratisches Rohr, Vieleckrohr od. dgl. ausgebildet ist, welchem zumindest eine Linearführung (9) und zumindest ein lineares Messsystem (8) zugeordnet ist.

15. Hub-/Schwenkantrieb nach wenigstens einem der Ansprüche 1 bis 14, **dadurch gekennzeichnet, dass** Drehelemente (12) und Hubmodul (4) als Hohlwellenelemente ausgebildet sind und eine axiale Durchführung (21) bilden.

## Claims

1. Lifting-/turning drive unit having a working element (2) that is movable rotatably and linearly relative to at least one housing element (1), wherein the working element (2) is formed from at least one lifting element (3) and at least one turning element (12), wherein the lifting element (3) is uncoupled relative to a rotational movement of the turning element (12),
**characterized in**
**that** the lifting element (3) and the turning element (12) are disposed rotationally uncoupled and coaxially one within the other.

2. Lifting-turning drive unit according to claim 1, **characterized in that** the working element (2) is formed from at least one lifting element (3) and at least one turning element (12), wherein the turning element (12) interacts with at least one rotary drive (15) and the lifting element (3) interacts with at least one linear drive (5).

3. Lifting-/turning drive unit according to claim 1 or 2, **characterized in that** with the working element (2), in particular the lifting element (3) and turning element (12) there is associated in each case a measuring system (8).

4. Lifting-/turning drive unit according to claim 2 or 3, **characterized in that** the lifting element (3) adjoins the turning element (12) in an axially movable and radially twistproof manner, wherein the turning element (12) within a rotary drive (15) is movable rotationally relative to the lifting element (3) and the rotary drive (15) is fixed relative to the housing element (1, 16).

5. Lifting-/turning drive unit according to claim 3 or 4, **characterized in that** lifting element (3) and turning element (12) are disposed successively in a common axis (A).

6. Lifting-/turning drive unit according to at least one of claims 1 to 5, **characterized in that** the lifting element (3) and/or the turning element (12) is mounted by means of at least one energy storage element (10/19) resiliently relative to the housing element (1) in order to realize a mass balance and hence relieve the linear drive (5).

7. Lifting-/turning drive unit according to at least one of claims 1 to 6, **characterized in that** associated with the turning element (12) is a rotary sleeve (13), associated with which is a rotary drive (15), wherein the rotary sleeve (13) is movable linearly and rotationally relative to the rotary drive (15).

8. Lifting-/turning drive unit according to claim 7, **characterized in that** the rotary sleeve (13) is designed as secondary part (7) of the rotary drive (12).

9. Lifting-/turning drive unit according to at least one of claims 2 to 8, **characterized in that** the rotary drive (15) is connected in a fixed manner to a rotary drive housing (16) or housing element (1).

10. Lifting-/turning drive unit according to claim 7 or 8, **characterized in that** the rotary drive (15) is disposed inside or outside the rotary sleeve (13) and the rotary sleeve (13) is movable linearly and rotationally relative to the rotary drive (12).

11. Lifting-/turning drive unit according to at least one of claims 2 to 10, **characterized in that** the lifting element (3) comprises a lifting module (4), with which at least one linear drive (5) is associated, wherein the lifting module (4) is axially movable relative to the linear drive (5).

12. Lifting-/turning drive unit according to claim 11, **characterized in that** the linear drive (5) is fixed relative to the housing element (1) and the lifting module (4) is disposed inside or outside the linear drive (5).

13. Lifting-/turning drive unit according to at least one of claims 1 to 12, **characterized in that** adjoining the lifting element (3) is a rotary drive housing (16) in which the rotary drive (15) is disposed, wherein the rotary sleeve (13) by means of at least one bearing element (14) is rotationally uncoupled relative to a lifting module (4) associated with the lifting element (3) and the turning element (12) is movable linearly by means of the lifting module (4).

14. Lifting-/turning drive unit according to at least one of claims 11 to 13, **characterized in that** the lifting module (4) takes the form of a tubular element, rectangular tube, square tube, polygonal tube or the like, with which at least one linear guide (9) and at least one linear measuring system (8) is associated.

15. Lifting-/turning drive unit according to at least one of claims 1 to 14, **characterized in that** turning elements (12) and lifting module (4) take the form of hollow shaft elements and form an axial leadthrough (21).

## Revendications

1. Entraînement de levage/pivotement avec un élément de travail (2) déplaçable en rotation et de manière linéaire par rapport à au moins un élément de boîtier (1), l'élément de travail (2) étant formé à partir d'au moins un élément de levage (3) et d'au moins un élément de rotation (12), l'élément de levage (3) étant découplé par rapport à un mouvement de rotation de l'élément de rotation (12),
**caractérisé par le fait**
**que** l'élément de levage (3) et l'élément de rotation (12) sont découplés en rotation et disposés coaxialement l'un dans l'autre.

2. Entraînement de levage/pivotement selon la revendication 1, **caractérisé par le fait que** l'élément de travail (2) est formé à partir d'au moins un élément de levage (3) et d'au moins un élément de rotation (12), l'élément de rotation (12) coopérant avec au moins un entraînement en rotation (15) et l'élément de levage (3) coopèrant avec au moins un entraînement linéaire (5).

3. Entraînement de levage/pivotement selon la revendication 1 ou 2, **caractérisé par le fait qu'**à l'élément de travail (2), en particulier l'élément de levage (3) et l'élément de rotation (12), est chaque fois associé un système de mesure (8).

4. Entraînement de levage/pivotement selon la revendication 2 ou 3, **caractérisé par le fait que** l'élément de levage (3) se raccorde de manière déplaçable axialement et immobile en rotation radialement à l'élément de rotation (12), l'élément de rotation (12) étant déplaçable en rotation dans un entraînement en rotation (15) par rapport à l'élément de levage (3) et que l'entraînement en rotation (15) est fixé par rapport à l'élément de boîtier (1, 16).

5. Entraînement de levage/pivotement selon la revendication 3 ou 4, **caractérisé par le fait que** l'élément de levage (3) et l'élément de rotation (12) sont disposés l'un derrière l'autre selon un axe commun (A).

6. Entraînement de levage/pivotement selon au moins l'une des revendications 1 à 5, **caractérisé par le fait que** l'élément de levage (3) et/ou l'élément de rotation (12) sont montés de manière élastique, au moyen d'au moins un élément d'accumulation de force (10/19) par rapport à l'élément de boîtier (1) en vue de réaliser une compensation de masse et, de ce fait, une décharge de l'entraînement linéaire (5).

7. Entraînement de levage/pivotement selon au moins l'une des revendications 1 à 6, **caractérisé par le fait qu'**à l'élément de rotation (12) est associée une douille rotative (13) et qu'à cette dernière est associé un entraînement en rotation (15), la douille rotative (13) étant déplaçable de manière linéaire et en rotation par rapport à l'entraînement en rotation (15).

8. Entraînement de levage/pivotement selon la revendication 7, **caractérisé par le fait que** la douille rotative (13) est réalisée sous forme de pièce secondaire (7) de l'entraînement en rotation (12).

9. Entraînement de levage/pivotement selon au moins l'une des revendications 2 à 8, **caractérisé par le fait que** l'entraînement en rotation (15) est rendu solidaire d'un boîtier d'entraînement en rotation (16) ou d'un élément de boîtier (1).

10. Entraînement de levage/pivotement selon la revendication 7 ou 8, **caractérisé par le fait que** l'entraînement en rotation (15) est disposé à l'intérieur ou à l'extérieur de la douille rotative (13) et que la douille rotative (13) est déplaçable de manière linéaire ou en rotation par rapport à l'entraînement en rotation (12).

11. Entraînement de levage/pivotement selon au moins l'une des revendications 2 à 10, **caractérisé par le fait que** l'élément de levage (3) présente un module de levage (4) auquel est associé au moins un entraînement linéaire (5), le module de levage (4) étant déplaçable axialement par rapport à l'entraînement linéaire (5).

12. Entraînement de levage/pivotement selon la revendication 11, **caractérisé par le fait que** l'entraînement linéaire (5) est fixé par rapport à l'élément de boîtier (1) et que le module de levage (4) est disposé à l'intérieur ou à l'extérieur de l'entraînement linéaire (5).

13. Entraînement de levage/pivotement selon au moins l'une des revendications 1 à 12, **caractérisé par le fait qu'**à l'élément de levage (3) vient se raccorder un boîtier d'entraînement en rotation (16) dans lequel est disposé l'entraînement en rotation (15), la douille rotative (13) étant découplée en rotation, par l'intermédiaire d'au moins un élément de roulement (14), par rapport à un module de levage (4) associé à l'élément de levage (3) et que l'élément de rotation (12) est déplaçable linéairement au moyen du module de levage (4).

14. Entraînement de levage/pivotement selon au moins l'une des revendications 11 à 13, **caractérisé par le fait que** le module de levage (4) est réalisé sous forme d'élément tubulaire, de tube rectangulaire, de tube carré, de tube polygonal ou autre, auquel sont associés au moins un guide linéaire (9) et au moins un système de mesure linéaire (8).

15. Entraînement de levage/pivotement selon au moins l'une des revendications 1 à 14, **caractérisé par le fait que** les éléments de rotation (12) et le module de levage (4) sont réalisés sous forme d'éléments d'arbre creux et constituent un passage axial (21).
